# EUROPEAN PATENT SPECIFICATION

(11) **EP 4 517 987 B1**
(45) Date of publication and mention of the grant of the patent: **15.07.2026**
(21) Application number: 23209100.9
(22) Date of filing: 10.11.2023
(51) Int. Cl.: H01M 50/342, H01M 50/143, H01M 50/147, F16K 17/16

(54) **BATTERY HAVING A CELL TOP COVER COMPRISING AN EXPLOSION-PROOF VALVE**
BATTERIE MIT EINEM ZELLENDECKEL, DER EIN EXPLOSIONSGESCHÜTZTES VENTIL UMFASST
BATTERIE DONT LE COUVERCLE SUPÉRIEUR DE CELLULE COMPREND UNE VALVE ANTI-EXPLOSION

(30) Priority: 01.09.2023 CN 202311125747
(43) Date of publication of application: 05.03.2025
(73) Proprietor: Jinko Energy Storage Technology Co., Ltd., Haining zhejiang (CN)
(72) Inventor: LIANG, Yadong, Shangrao, 334100 (CN)
(74) Representative: Balder IP Law, S.L.

(56) References cited:
- EP-A1- 4 184 672
- US-A1- 2023 048 535

## Description

### TECHNICAL FIELD

Embodiments of the present application relate to the technical field of cells, and in particular to battery having a cell top cover comprising an explosion-proof valve.

### BACKGROUND

In a thermal runaway, electrical and chemical energy restored in cells of a battery pack will be quickly released, leading to the rapid decomposition of electrolytes and chemicals to produce a large amount of gas, which in turn leads to a sharp increase in pressure inside the battery pack. In order to avoid explosion due to excessive pressure on inner walls of the battery pack, an explosion-proof valve is generally installed on each of the cells for pressure relief.

The explosion-proof valve is designed with a weak portion for burst. Under normal conditions, the internal air pressure of the cell is stable and below the explosion pressure threshold of the explosion-proof valve. In this case, the explosion-proof valve remains sealed to isolate the impact of the external environment on the internal of the cell. In response to there being an abnormality, a large amount of gas is generated inside the cell, leading to an increase in internal pressure. After reaching the explosion pressure threshold of the explosion-proof valve, the weak portion of the explosion-proof valve will burst and release the gas inside the cell, which achieves the purpose of pressure relief and avoids the explosion hazards caused by high internal pressure inside the cell.

European patent application EP4184672A1 discloses a power battery top cover structure comprising a top cover sheet and two power battery poles. An explosion-proof valve is arranged on the top cover sheet, and the explosion-proof valve comprises a blasting score. The explosion-proof valve disclosed therein further comprises a rupture disk body; the rupture disk body is welded to or arranged integrally with a top cover sheet body, the rupture disk body is provided with a first step to form a first surface and a second surface with a height difference, the first surface is located outside an edge of the second surface, the second surface is provided with an edge connection area and a central pressure release area, a connecting portion and a blasting score disconnected at the connecting portion are provided between the edge connection area and the central pressure release area, the central pressure release area is provided with a second step to form a third surface and a fourth surface with a height difference on the second surface, the third surface is located outside an edge of the fourth surface, and the blasting score is C-shaped on a surface of the central pressure release area. US patent application US20230048535A1 discloses a battery lid comprising a metal plate. The metal plate disclosed therein is integrally formed with a valve configured to be ruptured when a predetermined pressure is applied to the valve; and a surrounding plate portion surrounding the valve, and connected to the valve, wherein the valve comprises: a pressure receiving plate portion configured to be bent from a bending groove by pressure; and a thin plate portion having a thickness smaller than the thickness of the surrounding plate portion, and connecting the pressure receiving plate portion and the surrounding plate portion to each other, wherein the thin plate portion has a rupture groove engraved to have a depth in a thickness direction, and to pass through extension sections on respective imaginary lines extending from the bending groove, wherein the extension sections on the respective imaginary lines extending from the bending groove consist of only two sections around the pressure receiving plate portion, wherein the pressure receiving plate portion and the thin plate portion are each symmetrical with respect to a symmetry plane passing through a widthwise center of the bending groove, and extending in the thickness direction, and wherein the valve is configured such that, as the pressure receiving plate portion is bent from the bending groove and deformed by pressure applied to the valve, the extension sections are pulled more strongly than are any portions of the valve other than the extension sections in the valve, such that, when the predetermined pressure is applied to the valve, the valve is ruptured from one of the extension sections of the rupture groove.

### SMMMARY

The invention is as defined in claim 1. The preferred embodiments are set out in the appended set of dependent claims.

### BRIEF DESCRIPTION OF THE DRAWINGS

FIG. 1 is a top view of an explosion-proof valve provided according to an embodiment of the present application;
FIG. 2 is a bottom view of an explosion-proof valve provided according to an embodiment of the present application;
FIG. 3 is a top view of another explosion-proof valve provided according to an embodiment of the present application;
FIG. 4 is a front view of the explosion-proof valve shown in FIG. 3;
FIG. 5 is top view of yet another explosion-proof valve provided according to an embodiment of the present application;
FIG. 6 is a top view of still another explosion-proof valve provided according to an embodiment of the present application;
FIG. 7 is a front view of the explosion-proof valve shown in FIG. 6;
FIG. 8 is a top view of still another explosion-proof valve provided according to an embodiment of the present application;
FIG. 9 is a schematic structural view of a cell top cover provided according to another embodiment of the present application;
FIG. 10 is a top view of an aluminum foam sheet of a cell top cover provided according to another embodiment of the present application;
FIG. 11 is a bottom view schematic diagram of the aluminum foam sheet shown in FIG. 10; and
FIG. 12 is a schematic structural view of another cell top cover provided according to still another embodiment of the present application.
It should be noted that embodiments of FIGS. 1-5 and 8 are not according to the invention and are present for illustration purposes only.

### DETAILED DESCRIPTION

It can be seen from the background technology that a stable burst pressure threshold is the key to the normal operation of the explosion-proof valve.

However, in practical situations, the burst pressure threshold of the explosion-proof valve is influenced by multiple factors, which increases a difference between the burst pressure threshold in battery products and the designed burst pressure threshold, leading to the inability of the explosion-proof valve to function properly and creating safety hazards for the battery.

It is found in the analysis that the structure of the explosion-proof valve is the key to reduce the threshold variation of the explosion pressure of the explosion-proof valve. During the production and assembly processes, the thin plate structure of the explosion-proof valve is affected by external stress, leading to deformation and stress concentration in the weak portion of the explosion-proof valve, resulting in a decrease in the explosion pressure threshold of the explosion-proof valve, which in turn causes the explosion-proof valve to open at a pressure smaller than the design explosion pressure threshold, thereby affecting the normal operation of the battery. In addition, during the operation of the battery, normal chemical reactions inside the battery will also generate internal pressure circulation inside the battery, which drives some areas of the explosion-proof valve to fluctuate up and down, so that stress is also applied to the weak portion, thereby leading to a decrease in the explosion pressure threshold of the explosion-proof valve.

The embodiments of the present application provide an explosion-proof valve, which includes a burst disc with an external platform and an internal platform, a burst notch, and a connecting portion. The thickness of the internal platform is greater than that of the external platform, thereby increasing the thickness of the burst disc and thus increasing its strength, and avoiding deformation of the burst disc during production and assembly processes. The thickness of the burst notch 102 is smaller than the thickness of other parts on the explosion-proof valve, so that the burst notch 102 is the weak portion of the explosion-proof valve. The burst notch 102 is arranged around the outer circumference of the external platform. In response to the explosion-proof valve being opened, the burst notch tears and the burst disc opens, to release the pressure inside the battery. During the normal operation of the battery, an increase in the thickness of the burst disc can also prevent the internal pressure cycle from causing the explosion-proof valve to fluctuate up and down, thereby avoiding the stress applied to the burst notch, and thus avoiding a decrease in the bursting pressure threshold of the explosion-proof valve.

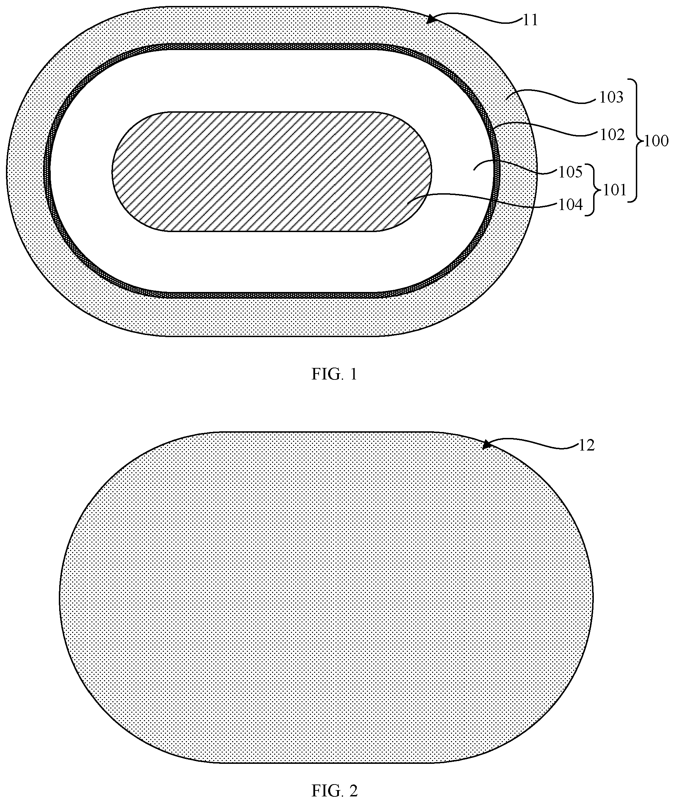

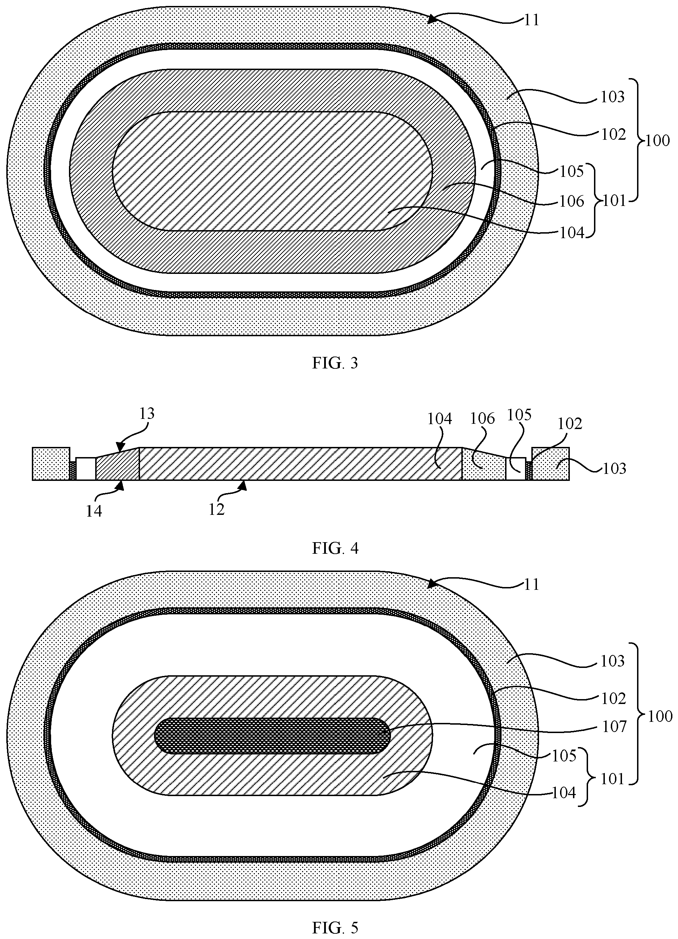

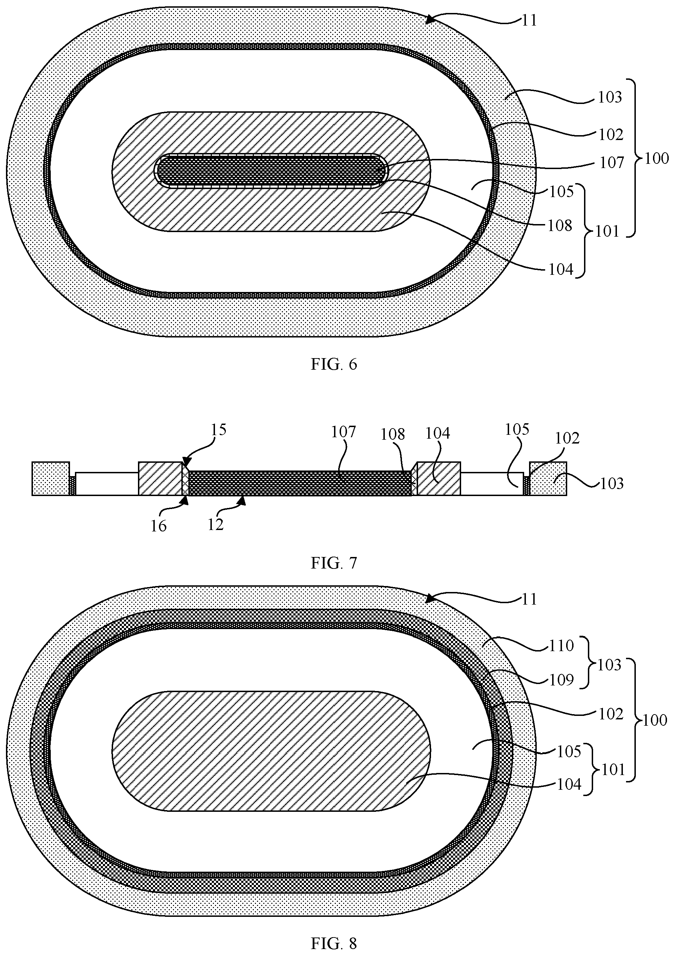

FIG. 1 is a top view of an explosion-proof valve provided according to an embodiment of the present application. FIG. 2 is a bottom view of an explosion-proof valve provided according to an embodiment of the present application. FIG. 3 is a top view of another explosion-proof valve provided according to an embodiment of the present application. FIG. 4 is a front view of the explosion-proof valve shown in FIG. 3. FIG. 5 is top view of yet another explosion-proof valve provided according to an embodiment of the present application. FIG. 6 is a top view of still another explosion-proof valve provided according to an embodiment of the present application. FIG. 7 is a front view of the explosion-proof valve shown in FIG. 6. FIG. 8 is a top view of still another explosion-proof valve provided according to an embodiment of the present application.

Referring to FIG. 1 and FIG. 2, an explosion-proof valve 100 provided according to the embodiments of the present application has an upper side 11 and a lower side 12 opposite to the upper side 11. The explosion-proof valve 100 further includes a burst disc 101, a burst notch 102, and a connecting portion 103. The burst disc 101 includes an internal platform 104 and an external platform 105.

In some embodiments, the material of the explosion-proof valve is aluminum or aluminum alloy. For example, the material of the explosion-proof valve is 1060 aluminum. The aluminum purity of 1060 aluminum material is over 99.6%, which has good formability, so that various pressure processing, stretching, or bending can be performed, thereby making the explosion-proof valve convenient for industrial production with specific shapes. 1060 aluminum also has good corrosion resistance, which is beneficial for preventing the explosion-proof valve from being corroded by the electrolyte inside the battery, thus avoiding the occurrence of a decrease in the strength of the explosion-proof valve. For example, the material of the explosion-proof valve may also be 3000 series aluminum alloy, such as 3003 aluminum alloy, 3105 aluminum alloy, or 3A21 aluminum alloy. The 3000 series aluminum alloy is an aluminum manganese alloy series. Due to the high content of manganese elements, it can effectively improve the corrosion resistance of the aluminum alloy, thereby avoiding the corrosion of the explosion-proof valve by the electrolyte and reducing the strength of the explosion-proof valve. The manganese elements further improve the welding performance of aluminum alloy, which facilitates the welding and fixation of explosion-proof valve and battery structure, thereby avoiding the occurrence of welding rupture caused by pressure impact when the explosion-proof valve releases pressure, and being conducive to maintaining the structural integrity of the battery.

In some embodiments, the explosion-proof valve is formed by an extrusion molding process. The extrusion molding process is a type of plastic processing method, which involves applying pressure to metal billet placed in a cavity of an extrusion mold, forcing the metal billet to undergo directional plastic deformation, extruding from a hole of the extrusion mold, and obtaining the required cross-sectional shape and size, as well as a part or semi-finished product with certain mechanical properties. The process characteristics of extrusion molding determine that it can be used not only for producing rod, tube, or wire products with simple cross-sectional shapes, but also for producing structures with complex cross-sectional shapes, which is conducive to mass production of the explosion-proof valve with complex shapes. Moreover, the precision of extruded products is high, the surface quality of the products is good, and they have good compatibility with light metals such as aluminum or light alloys such as aluminum alloy, which can reduce the defect rate of finished products and effectively improve the utilization rate of materials and the yield of finished products.

In some embodiments, the explosion-proof valve has a shape of capsule, which refers to a combination shape where the middle section is a quadrilateral shape, and the opposite sides of the quadrilateral shape extend into an arch, with the overall shape resembling a capsule. The straight edge of the arch coincides with the straight edge of the quadrilateral. A symmetrical structure is conducive to evenly distributing the force on the explosion-proof valve, avoiding the explosion-proof valve from being opened unexpectedly due to the concentration of stress on the explosion-proof valve in a certain area, thereby enabling the explosion-proof valve to operate normally. In addition, the arch reduces the sharp corners of the explosion-proof valve, which is conducive to processing and manufacturing. For example, in extrusion molding, compared to machined parts with sharp corners, the material of machined parts with rounded corners is easier to flow smoothly in the extrusion mold, and the stress at the round corners is also smaller, which can improve the quality of the explosion-proof valve.

The burst disc 101 is one of the components of the explosion-proof valve 100 on the top cover of the cell. The burst disc 101 is configured to guide the airflow when the explosion-proof valve 100 on the top cover of the cell is opened, and avoid a small amount of electrolyte contained in the airflow from splashing around, thereby avoiding corrosion of the battery.

The burst disc 101 includes an internal platform 104 and an external platform 105 arranged around the outer circumference of the internal platform 104. The external platform 105 is connected to the internal platform 104, and the thickness of the internal platform 104 is greater than that of the external platform 105, which increases the strength of the burst disc 101, avoids deformation of the burst disc 101, reduces the stress on the burst disc 102 caused by the burst disc 101, and helps to avoid variation in the bursting threshold of the burst disc 102, thereby improving the safety of the battery.

The thickness of the external platform 105 is greater than the thickness of the burst notch 102. In this way, the opening of the explosion-proof valve can be precisely controlled at the burst mark, avoiding the problem of the opening of the explosion-proof valve not being fixed, which is conducive to controlling the direction of the gas sprayed after the explosion-proof valve is opened, avoiding the occurrence of a small amount of electrolyte in the sprayed gas corroding the battery structure, and improving the safety of the battery.

In some embodiments, the thickness of the internal platform 104 is smaller than or equal to the thickness of the connecting portion 103. In other embodiments, the thickness of the internal platform 104 may be greater than the thickness of the connecting portion 103. The thickness of the internal platform is influenced by the manufacturing process of the explosion-proof valve. For example, in response to the explosion-proof valve 100 being formed by the extrusion molding process, due to the good plastic deformation ability of the material, materials of certain parts on the explosion-proof valve can be squeezed onto the internal platform, resulting in the thickness of the internal platform being greater than the thickness of the connecting portion. In this way, the thickness of the burst disc is increased, and the strength of the burst disc is at least increased, which is beneficial for avoiding easy deformation of the burst disc and improving the safety of the battery.

In some embodiments, referring to FIG. 3, the burst disc 101 further includes a first tilting portion 106. The first tilting portion 106 is connected between the external platform 105 and the internal platform 104. The thickness of the first tilting portion 106 gradually increases along the direction from the external platform 105 to the internal platform 104 so that it has the same thickness as the internal platform 104 at the inner edge facing the internal platform 104 and it has the same thickness as the external platform 105 at the outer edge facing the external platform. The first tilting portion forms a transition between the external platform and the internal platform, which reduces the manufacturing difficulty of the explosion-proof valve. In addition, the first tilting portion 106 is further configured to reduce the stress on the corners of the explosion-proof valve, which is conducive to avoiding the occurrence of damage caused by excessive concentration of stress on the corners of the explosion-proof valve and improving the quality of the product.

In some embodiments, referring to FIG. 4, the first tilting portion 106 has a first tilting surface 13 and a bottom surface 14 directly opposite the first tilting surface 13. The bottom surface 14 is a part of the lower side 12. In addition, a top surface of the internal platform 104 and a top surface of the external platform 105 are connected through the first tilting surface 13. An angle between the first tilting surface and a normal of the bottom surface is from 60 degrees to 89 degrees, for example, 60 degrees, 75 degrees, 85 degrees, or 89 degrees. It can be understood that as long as the first tilting portion 106 is connected between the external platform and the internal platform with different thicknesses, the angle between the first tilting surface and the normal of the bottom surface can be freely designed according to the type of processing technology of the explosion-proof valve.

In some embodiments, referring to FIG. 5, the explosion-proof valve 100 further includes an inner recess portion 107. The inner recess portion 107 is located in the central area of the burst disc 101, and the inner recess portion 107 is recessed from the upper side 11 towards the lower side 12 of the explosion-proof valve 100. The internal platform 104 is arranged around the outer circumference of the inner recess portion 107. The process of forming the inner recess portion includes stamping process, in which a press and a mold is used to reprocess the formed explosion-proof valve. In the process of forming explosion-proof valve, uneven surfaces are inevitably generated, and the internal recess portion can reduce the degree of unevenness on the surface of the explosion-proof valve, resulting in a better surface quality explosion-proof valve, which avoids quality problems caused by uneven stress on the surface of the explosion-proof valve, and is beneficial for improving the safety of the battery.

The thickness of the inner recess portion 107 is greater than the thickness of the burst notch 102. In this way, the situation where the explosion-proof valve opens at the inner recess portion instead of at the burst notch, or the situation where the explosion-proof valve opens simultaneously at the inner recess portion and the burst notch 102 is avoided, which is beneficial for controlling the opening position of the explosion-proof valve, thereby controlling the direction of the air flow inside the battery after the explosion-proof valve is opened, and avoiding the small amount of electrolyte carried by the air flow from corroding the battery structure.

In some embodiments, the thickness of the inner recess portion 107 is smaller than or equal to the thickness of the connecting portion 103. In other embodiments, the thickness of the inner recess portion 107 is also be greater than the thickness of the connecting portion 103. The thickness of the inner recess portion 107 can be freely designed according to different production processes. However, it can be understood that regardless of the manufacturing process, the thickness of the inner recess portion 107 is smaller than the thickness of the internal platform.

In some embodiments, referring to FIG. 6, the burst disc 101 further includes a second tilting portion 108. The second tilting portion 108 is connected between the internal platform 104 and the inner recess portion 107, and the thickness of the second tilting portion 108 gradually decreases along the direction from the internal platform 104 towards the inner recess portion 107. The second tilting portion 107 forms a transition between the inner recess portion 107 and the internal platform 104, which reduces the manufacturing difficulty of the explosion-proof valve. In addition, the second tilting portion 107 is further configured to reduce the stress on the corners of the explosion-proof valve, which is conducive to avoiding the occurrence of excessive concentration of corner stress and damage, and improving the quality of the product.

In some embodiments, referring to FIG. 7, the second tilting portion 108 has a second tilting surface 15 and a second bottom surface 16 directly opposite the second tilting surface 15. The second bottom surface 16 is a part of the lower side 12. A top surface of the internal platform 104 and a top surface of the inner recess portion 107 are connected through the second tilting surface 15, and an angle between the second tilting surface 15 and the normal of the second bottom surface 16 is smaller than or equal to 30 degrees, such as 30 degrees, 28 degrees, 15 degrees, or 9 degrees. It can be understood that as long as the second tilting portion is connected between the internal platform 104 and the inner recess portion 107 with different thicknesses, the angle between the second tilting surface and the normal perpendicular to the second bottom surface can be freely designed according to different processing technology of the explosion-proof valve.

Reference is made back to FIG. 1, the burst notch 102 is also one of the components of the explosion-proof valve 100 on the top cover of the cell. The burst notch 102 is arranged around the outer circumference of the external platform 105, and the burst notch 102 is recessed from the upper side 11 to the lower side 12. The thickness of the burst notch 102 is smaller than the thickness of the external platform 105, so that the burst notch 102 is the thinnest area on the explosion-proof valve 100 of the cell top cover. In response to there being an abnormal chemical reaction inside the battery, the pressure inside the battery gradually exceeds the pressure outside the battery. In response to the pressure inside the battery reaching the explosion threshold of the burst notch 102, the burst notch 102 breaks to create an opening on the explosion-proof valve, which causes gas inside the explosion-proof valve to leak out, and balances the pressure inside the explosion-proof valve with the pressure outside the explosion-proof valve, thereby preventing the battery from exploding.

In some embodiments, the thickness of the burst notch 102 is between 0.01mm-0.15mm. For example, 0.01mm, 0.02mm, 0.12mm, or 0.15mm. By controlling the thickness of the burst notch 102, the burst threshold of the burst notch 102 can be controlled. Based on this, the burst notch 102 can be designed to open under appropriate pressure to avoid affecting the normal operation of the battery. For example, sudden opening of the burst notch 102 during normal battery operation is avoided to avoid electrolyte leakage. For example, in order to prevent the burst notch 102 from not opening even when the battery burst pressure has been reached, the explosion-proof valve is prevented from losing its explosion-proof function.

In some embodiments, the cross-sectional shape of the recess is an inverted trapezoid with a height of 0. 18mm, a long side length of 0.3mm, and a short side length of 0.2mm. It can be understood that when designing burst notch 102, different properties such as cross-sectional shape, unfolding length, recess depth, and recess width can be changed according to the designed burst threshold to adapt to different application scenarios.

In some embodiments, the explosion-proof valve further includes reinforcing ribs, with a thickness greater than the thickness of the burst notch. The reinforcing ribs are arranged in a part of the recess, and are configured to enhance the connection of the burst notch 102 to the external platform 105 and the connecting portion 103, to avoid complete breakage of the burst notch 102 in response to the explosion-proof valve being opened, thereby avoiding the detachment of the burst disc 102 and preventing it from impacting other structures inside the battery after detachment, which is conducive to improving the safety of the battery.

In some embodiments, the thickness of the reinforcing ribs is between 0.16mm and 0.25mm. For example, 0.16mm, 0.18mm, 0.21mm, or 0.25mm. It can be understood that as long as the reinforcing ribs can enhance the connection between of the burst notch 102 to the external platform 105 and the connecting portion 103, the thickness of the reinforcing ribs can be freely designed.

In some embodiments, the unfolded length of the reinforcing ribs can be smaller than or equal to one-sixth of the unfolded length of the burst notch. In this way, the problem of the breakable part of the burst notch 102 being too short and affecting the exhaust capacity of the explosion-proof valve is avoided, which is at least conducive to improving the explosion-proof effect of the explosion-proof valve and thereby improving the safety of the battery. It can be understood that a ratio of the unfolded length of the reinforcing ribs to the unfolded length of the burst notch 102 needs to be designed in conjunction with the structure of the burst notch 102.

In some embodiments, the explosion-proof valve 100 on the cell top cover further includes installation mark. The installation mark is arranged on the lower side, or arranged adjacent to the reinforcing ribs. The installation mark is configured to improve the degree of identification of the installation direction of the explosion-proof valve on the cell top cover. In this way, the installation direction of the explosion-proof valve is standardized, which guides the direction of the airflow inside the cell after the explosion-proof valve is opened, and avoids airflow damaging the internal structure of the battery, thereby improving the safety of the battery.

In some embodiments, the shape of the installation mark is a glyph. In other embodiments, the shape of the installation mark is a graphic. It can be understood that as long as the installation mark is recognizable, the shape of the installation mark can be in any form.

Reference is made back to FIG. 1, the connecting portion 103 is also one of the components of the explosion-proof valve 100 on the cell top cover. The connecting portion 103 is arranged around the outer circumference of the burst notch 102, and is connected to the burst notch 102. The connecting portion is 103 configured to facilitate the connection between the explosion-proof valve 100 and the cell top cover. In some embodiments, the explosion-proof valve 100 and the cell top cover can be fixed by welding the connecting portion 103 and the cell top cover, thereby sealing the cell and avoiding the leakage of electrolyte inside the cell.

In some embodiments, referring to FIG. 8, the connecting portion 103 includes a first outer ring portion 109 and a second outer ring portion 110. The first outer ring portion 109 is arranged around the outer circumference of the burst notch 102, and the first outer ring portion 109 is connected to the burst notch 102. The first outer ring portion 109 is configured to connect the second outer ring with the burst notch. The second outer ring portion 110 is arranged around the outer circumference of the first outer ring portion 109, and the second outer ring portion 110 is connected to the first outer ring portion 109. The second outer ring portion 110 is configured to provide a contact surface for the connection between the explosion-proof valve 100 and the cell top cover. In this way, the connection between the explosion-proof valve 100 and the cell top cover is facilitated, the standardization of the explosion-proof valve is improved, which is beneficial for improving assembly efficiency and production efficiency. In addition, quality problems caused by incomplete alignment between the explosion-proof valve 100 and the cell top cover are avoided, which is beneficial for improving the safety of the battery.

In some embodiments, the thickness of the first outer ring portion 109 is smaller than or equal to the thickness of the second outer ring portion 110. In order to facilitate the manufacturing of the burst notch 102, the thickness of the first outer ring portion 109 is smaller than the thickness of the second outer ring portion 110, and the thickness of the first outer ring portion 109 is greater than the thickness of the burst notch 102. For example, in response to the explosion-proof valve being formed by the extrusion molding, it is generally not possible to form the burst notch 102 with a precise size. Therefore, it is necessary to perform secondary processing on the extruded explosion-proof valve and etch the burst notch 102 with the precise size on the explosion-proof valve 100. In order to facilitate etching, the thickness of the first outer ring portion 109 can be smaller than the thickness of the second outer ring portion 110.

In some embodiments, the thickness of the first outer ring portion 109 is greater than or equal to the thickness of the external platform 105. The thickness of the first outer ring portion 109 can be equal to the thickness of the external platform, which is conducive to the processing of the burst notch 102. The thickness of the first outer ring portion 109 may also be greater than the thickness of the external platform 105, which avoids the thickness of the explosion-proof valve from being changed, thus giving the first outer ring portion 109 a certain strength, avoiding deformation of the first outer ring portion 109 during the processing and/or operation, thereby avoiding stress applied to the burst notch 102, and thus avoiding variation in the burst threshold of the burst notch 102, which is beneficial for improving the safety of the battery.

In some embodiments, the thickness of the second outer ring portion 110 is 0.3mm-0.7mm. For example, 0.3mm, 0.4mm, 0.5mm, or 0.7mm. In some embodiments, the thickness of the second outer ring portion 110 is the same as the thickness of a substrate forming the explosion-proof valve 100. The second outer ring portion 110 is a part connecting the explosion-proof valve 100 and the cell top cover, so that the second outer ring portion 110 needs to have a certain thickness to avoid the problem of the explosion-proof valve 100 falling off from the cell top cover due to a thin second outer ring portion 110, thereby avoiding the impact on the safety of the battery. At the same time, the second outer ring portion 110 should not be too thick to avoid overcrowding the space of other structures on the cell top cover, and it is beneficial to avoid material waste.

In some embodiments, a ratio of the thickness of the internal platform 104 to the thickness of the second outer ring portion 110 is between 0.4 and 2. For example, it may be 0.4, 0.5, 1.9, or 2. In this way, a situation where the internal platform 104 is too thick, and the explosion-proof valve 100 is difficult to fit the cell top cover, and a situation where the internal platform 104 is too thin, resulting in insufficient strength and easy deformation of the burst disc 102 are avoided.

The explosion-proof valve 100 of the cell top cover provided according to the above embodiments includes a burst disc 101, a burst notch 102, and a connecting portion 103. Under normal condition, the burst disc 101 is configured to seal the cell and prevent electrolyte inside the cell from leaking out the cell. In response to the explosion-proof valve 100 being opened, the burst disc 101 breaks to form an opening to exhaust gas inside the cell, so that pressure is balanced inside the cell and outside the cell, thereby preventing the cell from exploding. The burst disc 101 includes an internal platform 104 and an external platform 105 arranged around the outer circumference of the internal platform 104, and the thickness of the internal platform 104 is greater than the thickness the external platform 105, thereby increasing the strength of the burst disc 101. Deformation of the burst disc 101 during the installation and/or operation is avoided, so that a situation where the burst notch 102 connected to the burst disc 101 is damaged by stress is avoided, thereby improving the safety of the cell. The burst notch 102 is defined around the outer circumference of the external platform. The burst notch 102 has the smallest thickness on the explosion-proof valve 100, and is configured to be opened in response the pressure inside the cell exceeding a safety threshold. The burst notch 102 makes the opening position of the explosion-proof valve 100 controllable, which is beneficial for improving the safety of the battery. In addition, the burst notch 102 is a recess recessed from the upper side 11 to the lower side 12 of the explosion-proof valve 100, which is beneficial for avoiding crystals formed at the burst notch 102 during electrolyte reaction, thereby avoiding the impact on the burst threshold of the burst notch 102. The connecting portion 103 is arranged around the outer circumference of the burst notch 102 and is connected to the burst notch 102. The connection portion 103 is configured to facilitate the connection between the explosion-proof valve 100 and the cell top cover, so as to fix the explosion-proof valve 100 on the cell top cover and avoid safety issues caused by the explosion-proof valve 100 falling off from the cell top cover during operation.

Correspondingly, a cell top cover is provided according to another embodiment of the present application, and the cell top cover includes an explosion-proof valve provided according to the above embodiments. The cell top cover provided according to another embodiment of the present application will be described as follows in conjunction with the accompanying drawings. Reference for the same or corresponding parts as the previous embodiments is made to the above embodiments, and will not be elaborated in detail below.

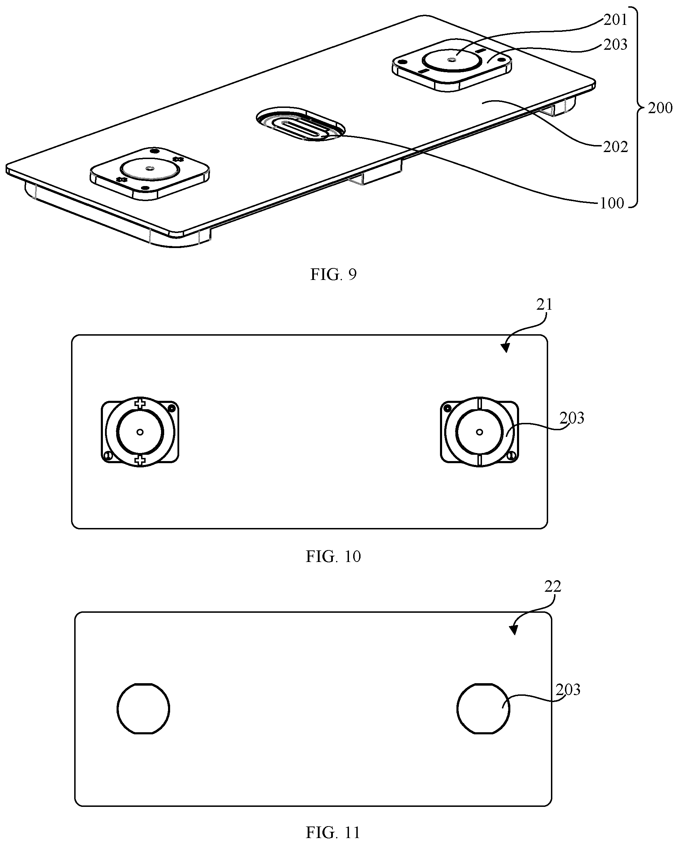

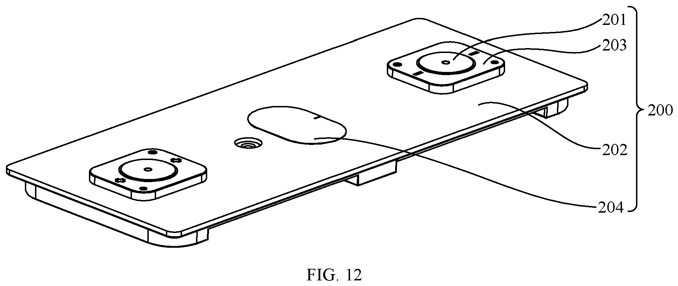

FIG. 9 is a schematic structural view of a cell top cover provided according to another embodiment of the present application. FIG. 10 is a top view of an aluminum foam sheet of a cell top cover provided according to another embodiment of the present application. FIG. 11 is a bottom view schematic diagram of the aluminum foam sheet shown in FIG. 10. FIG. 12 is a schematic structural view of another cell top cover provided according to still another embodiment of the present application.

Referring to FIG. 9, the cell top cover 200 includes a positive pole 201, a negative pole 201 and an aluminum foam sheet 202. Two pole holes 203 are defined on the aluminum foam sheet 202 for the positive pole 201 and the negative pole 201 to pass through, respectively. The aluminum foam sheet 202 is defined with two pole holes 203 for the poles 201 to pass through, respectively. The cell top cover 200 further includes the explosion-proof valve 100 provided according to the above embodiments.

The poles 201 are configured to electrically connect the circuit between the cell and the outside of the cell. In some embodiments, the poles 201 include a positive pole 201 and a negative pole 201. The positive pole 201 is configured to electrically connect the positive electrode inside the cell to the negative electrode of the external circuit. The negative pole 201 is configured to electrically connect the negative electrode inside the cell to the positive electrode of the external circuit. In some embodiments, the material of the positive pole 201 is aluminum. In some embodiments, the material of the negative pole 201 may be copper aluminum composite material or nickel aluminum composite material, etc.

The aluminum foam sheet 202 is configured to seal the cell. The pole holes 203 are through holes, which facilitates the installation of the poles 201.

In some embodiments, a liquid injection hole is further defined on the aluminum foam sheet 202. The liquid injection hole is used in injecting electrolyte into the installed cell, so that electrochemical reactions occur in the electrolyte and form a current.

In some embodiments, the liquid injection hole is defined away from the negative pole 201 and the pole hole 203 corresponding to the negative pole 201, which can prevent current leakage caused by preventing the electrolyte from accidentally leaking out and adhering to the negative pole during the injection of electrolyte into the liquid injection hole, thereby at least improving the safety of the battery.

In some embodiments, explosion-proof through-holes penetrating through the aluminum foam sheet 202 are further defined on the aluminum foam sheet 202. The explosion-proof through-holes is used in installing the explosion-proof valve, provides an external leakage path for the sprayed gas after the explosion-proof valve is opened to play a role in balancing the internal and external pressure of the cell, so that the cell is prevented from exploding, and thereby at least improving the safety of the battery.

Referring to FIG. 10 and FIG. 11, the aluminum foam sheet 202 has a first surface 21 and a second surface 22 opposite to the first surface 21. Reference is further made to FIG. 1 and FIG. 2, the explosion-proof valve 100 provided according to the embodiments of the present application has the upper side 11 and the lower side 12 opposite to the upper side 11. The explosion-proof valve 100 includes a burst disc 101, a burst notch 102, and a connecting portion 103.

In some embodiments, the explosion-proof valve 100 is fixed on the second surface 22, and the upper side 11 is fixed in contact with the lower side 21 of the aluminum foam sheet 202. In response to the explosion-proof valve 100 being opened, the burst disc 101 breaks from the lower side 12 towards the upper side 11, which causes the gas inside the cell to be exhausted.

In some embodiments, the material of the explosion-proof valve is aluminum or aluminum alloy. For example, the material of the explosion-proof valve is 1060 aluminum. The aluminum purity of 1060 aluminum material is over 99.6%, which has good formability, so that various pressure processing, stretching, or bending can be performed, thereby making the explosion-proof valve convenient for industrial production with specific shapes. 1060 aluminum also has good corrosion resistance, which is beneficial for preventing the explosion-proof valve from being corroded by the electrolyte inside the battery, thus avoiding the occurrence of a decrease in the strength of the explosion-proof valve. For example, the material of the explosion-proof valve may also be 3000 series aluminum alloy, such as 3003 aluminum alloy, 3105 aluminum alloy, or 3A21 aluminum alloy. The 3000 series aluminum alloy is an aluminum manganese alloy series. Due to the high content of manganese elements, it can effectively improve the corrosion resistance of the aluminum alloy, thereby avoiding the corrosion of the explosion-proof valve by the electrolyte and reducing the strength of the explosion-proof valve. The manganese elements further improve the welding performance of aluminum alloy, which facilitates the welding and fixation of explosion-proof valve and battery structure, thereby avoiding the occurrence of welding rupture caused by pressure impact when the explosion-proof valve releases pressure, and being conducive to maintaining the structural integrity of the battery.

In some embodiments, the explosion-proof valve is formed by an extrusion molding process. The extrusion molding process is a type of plastic processing method, which involves applying pressure to metal billet placed in a cavity of an extrusion mold, forcing the metal billet to undergo directional plastic deformation, extruding from a hole of the extrusion mold, and obtaining the required cross-sectional shape and size, as well as a part or semi-finished product with certain mechanical properties. The process characteristics of extrusion molding determine that it can be used not only for producing rod, tube, or wire products with simple cross-sectional shapes, but also for producing structures with complex cross-sectional shapes, which is conducive to mass production of the explosion-proof valve with complex shapes. Moreover, the precision of extruded products is high, the surface quality of the products is good, and they have good compatibility with light metals such as aluminum or light alloys such as aluminum alloy, which can reduce the defect rate of finished products and effectively improve the utilization rate of materials and the yield of finished products.

In some embodiments, the explosion-proof valve has a shape of capsule, which refers to a combination shape where the middle section is a quadrilateral shape, and the opposite sides of the quadrilateral shape extend into an arch, with the overall shape resembling a capsule. The straight edge of the arch coincides with the straight edge of the quadrilateral. A symmetrical structure is conducive to evenly distributing the force on the explosion-proof valve, avoiding the explosion-proof valve from being opened unexpectedly due to the concentration of stress on the explosion-proof valve in a certain area, thereby enabling the explosion-proof valve to operate normally. In addition, the arch reduces the sharp corners of the explosion-proof valve, which is conducive to processing and manufacturing. For example, in extrusion molding, compared to machined parts with sharp corners, the material of machined parts with rounded corners is easier to flow smoothly in the extrusion mold, and the stress at the round corners is also smaller, which can improve the quality of the explosion-proof valve.

In some embodiments, referring to FIG. 12, the cell top cover 200 further includes a protection sheet 204. The protection sheet 204 is fixed on the first surface 21 and is configured to cover the explosion-proof through-hole. The protection sheet 204 is configured to protect the explosion-proof valve from being damaged by foreign objects, so that the explosion-proof valve can operation properly, which prevent the battery from exploding, thereby at least improving the safety of the battery. In addition, the protection sheet 204 is further configured to block a small amount of electrolyte brought out by the spraying airflow after the explosion-proof valve is opened, to prevent the electrolyte from splashing onto the negative pole with the airflow and causing leakage of the battery.

In some embodiments, the protection sheet 204 is made of transparent or semitransparent material, which allows for convenient observation of the upper side of the explosion-proof valve, facilitates timely detection of damage to the explosion-proof valve to take actions to avoid safety issues caused by the use of the explosion-proof valve in case of damage, thereby improving the safety of the battery.

In some embodiments, the protection sheet 204 includes a gasket and a protection sheet body. The protection sheet body is fixed on the gasket and covers the explosion-proof through-hole, and the gasket is fixed on the first surface and arranged around the outer circumstance of the explosion-proof through-hole. In this way, a specific area of the protection sheet is designed to be fixed to the aluminum foam sheet, which improves the standardization of the cell top cover, and is conducive to improving assembly efficiency and production efficiency. In addition, quality problems caused by incomplete alignment of the protection sheet and cell top cover are avoided, which is conducive to improving the safety of the battery.

In some embodiments, an opening that runs through the protection sheet 204 is defined on the protection sheet 204. The opening is used to form a gas flow channel, to prevent the gas inside the cell from being obstructed and unable to be exhausted after the explosion-proof valve is opened, and to prevent the cell from exploding due to the increase in internal pressure.

In some embodiments, the opening is defined in an edge area on a side away from the liquid injection hole of the protection sheet 204, which can prevent residual electrolyte from entering a cavity formed between the protection sheet 204 and the explosion-proof valve 100 from the opening, thereby avoiding electrolyte corrosion of the explosion-proof valve and avoiding the problem of the explosion-proof valve being unable to operate normally after being damaged.

In some embodiments, a distance from the end of the opening to the center of the protection sheet 204 is smaller than a distance from the edge of the protection sheet 204 to the center of the protection sheet 204. In this way, the direction and range of the gas sprayed through the opening can be controlled, which reduces the damage of the gas to the battery structure, and thereby at least improving the safety of the battery.

In some embodiments, the opening is circular. In other embodiments, the opening is square. In further embodiments, the opening may also be a glyph. It can be understood that the opening is configured to achieve gas flow between the cavity between the protection sheet 204 and the explosion-proof valve and the external environment, so that the opening may be in various shapes.

In some embodiments, a width of the opening within the protection sheet 204 is within 1mm along the direction perpendicular to the opening towards the center of the protection sheet 204. In this way, foreign objects entering the cavity between the protection sheet and the explosion-proof valve caused by excessive width can be prevented, thereby avoiding damage or corrosion to the explosion-proof valve caused by foreign objects, which is beneficial for improving the safety of the battery. For example, in response to the opening being a rectangle with a short side facing the center of the protection sheet 204, the short side of the rectangle may have a length of 0.2mm, 0.5mm, 0.7mm, or 1mm.

The cell top cover 200 provided according to another embodiment of the present application includes a positive pole 201, a negative pole 201, and an aluminum foam sheet 202. The poles 201 are configured to electrically connect the cell and a circuit outside the cell. The aluminum foam sheet 202 is configured to seal the cell. Two pole holes 203 are defined on the aluminum foam sheet to facilitate the installation of the poles 201. The cell top cover 200 further includes an explosion-proof valve 100. The explosion-proof valve 100 includes a burst disc 101, a burst notch 102, and a connecting portion 103. A combination of the burst disc 101 and the aluminum foam sheet 202 is used to seal the cell, thereby avoiding the leakage of electrolyte inside the cell. In response to the explosion-proof valve 100 being opened, the burst disc 101 breaks to form an opening to exhaust gas inside the cell, so that pressure is balanced inside the cell and outside the cell, thereby preventing the cell from exploding. The burst disc 101 includes an internal platform 104 and an external platform 105 arranged around the outer circumference of the internal platform 104, and the thickness of the internal platform 104 is greater than the thickness the external platform 105, thereby increasing the strength of the burst disc 101. Deformation of the burst disc 101 during the installation and/or operation is avoided, so that a situation where the burst threshold of the burst notch 102 connected to the burst disc 101 is varied by stress is avoided, thereby ensuring the explosion-proof valve 100 to operate normally and improving the safety of the cell. The burst notch 102 is defined around the outer circumference of the external platform. The thickness of the burst notch 102 is smaller than the thickness of the external platform 105. The burst notch 102 has the smallest thickness on the explosion-proof valve 100, and is configured to be opened in response the pressure inside the cell exceeding a safety threshold. The burst notch 102 makes the opening position of the explosion-proof valve 100 controllable, which is beneficial for improving the safety of the battery. In addition, the burst notch 102 is a recess recessed from the upper side 11 to the lower side 12 of the explosion-proof valve 100, which is beneficial for avoiding crystals formed at the burst notch 102 during electrolyte reaction inside the cell, thereby avoiding the impact on the burst threshold of the burst notch 102. The connecting portion 103 is arranged around the outer circumference of the burst notch 102 and is connected to the burst notch 102. The connection portion 103 is configured to facilitate the connection between the explosion-proof valve 100 and the cell top cover, so as to fix the explosion-proof valve 100 on the cell top cover and avoid safety issues caused by the explosion-proof valve 100 falling off from the cell top cover during operation.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "has," "having," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

In addition, when parts such as a layer, a film, a region, or a plate is referred to as being "on" another part, it may be "directly on" another part or may have another part present therebetween. In addition, when a part of a layer, film, region, plate, etc., is "directly on" another part, it means that no other part is positioned therebetween.

## Claims

1. A battery having a cell top cover (200) comprising an explosion-proof valve (100), the explosion-proof valve (100) having an upper side (11) and a lower side (12) opposite to the upper side (11), the explosion-proof valve (100) comprising:
a burst disc (101) having an internal platform (104) and an external platform (105) around an outer circumference of the internal platform (104), wherein a thickness of the internal platform (104) is greater than a thickness of the external platform (105);
a burst notch (102) including a recess around an outer circumference of the external platform (105) between the external platform (105) and a connecting portion (103), wherein the recess is recessed from the upper side (11) of the explosion-proof valve (100) toward the lower side (12) of the explosion-proof valve (100) and has a depth smaller than the thickness of the external platform (105); and
the connecting portion (103) arranged around an outer circumference of the burst notch (102) and connected to the burst notch (102), wherein the connecting portion (103) is configured to connect the explosion-proof valve (100) to the cell top cover (200),
**characterized in that**,
the explosion-proof valve (100) further comprises an inner recess portion (107), wherein the internal platform (104) is arranged around an outer circumference of the inner recess portion (107), and the inner recess portion (107) is recessed from the upper side (11) to the lower side (12) and located in a central area of the burst disc (101), and is configured to reduce the degree of unevenness on the surface of the explosion-proof valve (100);
wherein a thickness of the inner recess portion (107) is greater than the thickness of the burst notch (102),
the burst disc (101) further comprises a second tilting portion (108) connected between the internal platform (104) and the inner recess portion (107), and a thickness of the second tilting portion (108) gradually decreases along a direction from the internal platform (104) to the inner recess portion (107).

2. The battery having the cell top cover (200) comprising the explosion-proof valve (100) according to claim 1, wherein the thickness of the inner recess portion (107) is less than or equal to a thickness of the connecting portion (103).

3. The battery having the cell top cover (200) comprising the explosion-proof valve (100) according to claim 1, wherein the thickness of the burst notch (102) is 0.01mm to 0.15mm.

4. The battery having the cell top cover (200) comprising the explosion-proof valve (100) according to claim 1, wherein the second tilting portion (108) has a second tilting surface (15) and a second bottom surface (16) directly opposite the second tilting surface (15), and the second bottom surface (16) is a part of the lower side (12);
wherein a top surface of the internal platform (104) and a top surface of the inner recess portion (107) are connected through the second tilting surface (15), and an angle between the second tilting surface (15) and a normal of the second bottom surface (16) is smaller than or equal to 30 degrees.

5. The battery having the cell top cover (200) comprising the explosion-proof valve (100) according to claim 1, wherein the recess has a cross-sectional shape of an inverted trapezoid.

6. The battery having the cell top cover (200) comprising the explosion-proof valve (100) according to any one of claims 1 to 5, wherein the cell top cover (200) comprises a positive pole (201), a negative pole and an aluminum foam sheet (202), wherein two pole holes (203) are defined on the aluminum foam sheet (202) for the positive pole (201) and the negative pole to pass through, respectively.

## Patentansprüche

1. Batterie mit einem Zellendeckel (200), der ein explosionsgeschütztes Ventil (100) umfasst, wobei das explosionsgeschützte Ventil (100) eine Oberseite (11) und eine der Oberseite (11) gegenüberliegende Unterseite (12) aufweist, wobei das explosionsgeschützte Ventil (100) umfasst:
eine Berstscheibe (101) mit einer inneren Plattform (104) und einer äußeren Plattform (105) um einen Außenumfang der inneren Plattform (104), wobei eine Dicke der inneren Plattform (104) größer ist als eine Dicke der äußeren Plattform (105) ;
eine Berstkerbe (102), die eine Ausnehmung um einen Außenumfang der äußeren Plattform (105) zwischen der äußeren Plattform (105) und einem Verbindungsabschnitt (103) umfasst, wobei die Ausnehmung von der Oberseite (11) des explosionsgeschützten Ventils (100) zur Unterseite (12) des explosionsgeschützten Ventils (100) hin vertieft ist und eine Tiefe aufweist, die kleiner ist als die Dicke der äußeren Plattform (105) ; und
den Verbindungsabschnitt (103), der um einen Außenumfang der Berstkerbe (102) angeordnet und mit der Berstkerbe (102) verbunden ist, wobei der Verbindungsabschnitt (103) dazu ausgebildet ist, das explosionsgeschützte Ventil (100) mit dem Zellendeckel (200) zu verbinden,
**dadurch gekennzeichnet, dass**
das explosionsgeschützte Ventil (100) ferner einen inneren Vertiefungsabschnitt (107) umfasst, wobei die innere Plattform (104) um einen Außenumfang des inneren Vertiefungsabschnitts (107) angeordnet ist und der innere Vertiefungsabschnitt (107) von der Oberseite (11) zur Unterseite (12) hin vertieft ist und sich in einem zentralen Bereich der Berstscheibe (101) befindet und dazu ausgebildet ist, den Grad der Unebenheit auf der Oberfläche des explosionsgeschützten Ventils (100) zu verringern ;
wobei eine Dicke des inneren Vertiefungsabschnitts (107) größer ist als die Dicke der Berstkerbe (102),
die Berstscheibe (101) ferner einen zweiten Neigungsabschnitt (108) umfasst, der zwischen der inneren Plattform (104) und dem inneren Vertiefungsabschnitt (107) verbunden ist, und eine Dicke des zweiten Neigungsabschnitts (108) in einer Richtung von der inneren Plattform (104) zum inneren Vertiefungsabschnitt (107) hin allmählich abnimmt.

2. Batterie mit dem Zellendeckel (200), der das explosionsgeschützte Ventil (100) nach Anspruch 1 umfasst, wobei die Dicke des inneren Vertiefungsabschnitts (107) kleiner als oder gleich einer Dicke des Verbindungsabschnitts (103) ist.

3. Batterie mit dem Zellendeckel (200), der das explosionsgeschützte Ventil (100) nach Anspruch 1 umfasst, wobei die Dicke der Berstkerbe (102) 0,01 mm bis 0,15 mm beträgt.

4. Batterie mit dem Zellendeckel (200), der das explosionsgeschützte Ventil (100) nach Anspruch 1 umfasst, wobei der zweite Neigungsabschnitt (108) eine zweite Neigungsfläche (15) und eine zweite Bodenfläche (16) aufweist, die der zweiten Neigungsfläche (15) direkt gegenüberliegt, und die zweite Bodenfläche (16) ein Teil der Unterseite (12) ist ;
wobei eine obere Fläche der inneren Plattform (104) und eine obere Fläche des inneren Vertiefungsabschnitts (107) über die zweite Neigungsfläche (15) verbunden sind, und ein Winkel zwischen der zweiten Neigungsfläche (15) und einer Normalen der zweiten Bodenfläche (16) kleiner als oder gleich 30 Grad ist.

5. Batterie mit dem Zellendeckel (200), der das explosionsgeschützte Ventil (100) nach Anspruch 1 umfasst, wobei die Ausnehmung eine Querschnittsform eines umgekehrten Trapezes aufweist.

6. Batterie mit dem Zellendeckel (200), der das explosionsgeschützte Ventil (100) nach einem der Ansprüche 1 bis 5 umfasst, wobei der Zellendeckel (200) einen Pluspol (201), einen Minuspol und eine Aluminiumschaumfolie (202) umfasst, wobei zwei Pollöcher (203) auf der Aluminiumschaumfolie (202) definiert sind, damit der Pluspol (201) und der Minuspol jeweils hindurchgeführt werden können.

## Revendications

1. Batterie comprenant un couvercle supérieur de cellule (200) comprenant une valve anti-explosion (100), la valve anti-explosion (100) ayant un côté supérieur (11) et un côté inférieur (12) opposé au côté supérieur (11), la valve anti-explosion (100) comprenant :
un disque de rupture (101) ayant une plateforme interne (104) et une plateforme externe (105) autour d'une circonférence extérieure de la plateforme interne (104), dans lequel une épaisseur de la plateforme interne (104) est supérieure à une épaisseur de la plateforme externe (105) ;
une encoche de rupture (102) comprenant un évidement autour d'une circonférence extérieure de la plateforme externe (105) entre la plateforme externe (105) et une portion de connexion (103), dans lequel l'évidement est en retrait depuis le côté supérieur (11) de la valve anti-explosion (100) vers le côté inférieur (12) de la valve anti-explosion (100) et a une profondeur inférieure à l'épaisseur de la plateforme externe (105) ; et
la portion de connexion (103) disposée autour d'une circonférence extérieure de l'encoche de rupture (102) et connectée à l'encoche de rupture (102), dans lequel la portion de connexion (103) est configurée pour connecter la valve anti-explosion (100) au couvercle supérieur de cellule (200),
**caractérisée en ce que**,
la valve anti-explosion (100) comprend en outre une portion en retrait interne (107), dans lequel la plateforme interne (104) est disposée autour d'une circonférence extérieure de la portion en retrait interne (107), et la portion en retrait interne (107) est en retrait depuis le côté supérieur (11) vers le côté inférieur (12) et est située dans une zone centrale du disque de rupture (101), et est configurée pour réduire le degré d'irrégularité sur la surface de la valve anti-explosion (100) ;
dans lequel une épaisseur de la portion en retrait interne (107) est supérieure à l'épaisseur de l'encoche de rupture (102),
le disque de rupture (101) comprend en outre une deuxième portion inclinée (108) connectée entre la plateforme interne (104) et la portion en retrait interne (107), et une épaisseur de la deuxième portion inclinée (108) diminue progressivement dans une direction allant de la plateforme interne (104) vers la portion en retrait interne (107).

2. Batterie comprenant le couvercle supérieur de cellule (200) comprenant la valve anti-explosion (100) selon la revendication 1, dans lequel l'épaisseur de la portion en retrait interne (107) est inférieure ou égale à une épaisseur de la portion de connexion (103).

3. Batterie comprenant le couvercle supérieur de cellule (200) comprenant la valve anti-explosion (100) selon la revendication 1, dans lequel l'épaisseur de l'encoche de rupture (102) est comprise entre 0,01 mm et 0,15 mm.

4. Batterie comprenant le couvercle supérieur de cellule (200) comprenant la valve anti-explosion (100) selon la revendication 1, dans lequel la deuxième portion inclinée (108) a une deuxième surface inclinée (15) et une deuxième surface inférieure (16) directement opposée à la deuxième surface inclinée (15), et la deuxième surface inférieure (16) est une partie du côté inférieur (12) ;
dans lequel une surface supérieure de la plateforme interne (104) et une surface supérieure de la portion en retrait interne (107) sont connectées par l'intermédiaire de la deuxième surface inclinée (15), et un angle entre la deuxième surface inclinée (15) et une normale de la deuxième surface inférieure (16) est inférieur ou égal à 30 degrés.

5. Batterie comprenant le couvercle supérieur de cellule (200) comprenant la valve anti-explosion (100) selon la revendication 1, dans lequel l'évidement a une forme en section transversale de trapèze inversé.

6. Batterie comprenant le couvercle supérieur de cellule (200) comprenant la valve anti-explosion (100) selon l'une quelconque des revendications 1 à 5, dans lequel le couvercle supérieur de cellule (200) comprend un pôle positif (201), un pôle négatif et une feuille de mousse d'aluminium (202), dans lequel deux trous de pôle (203) sont définis sur la feuille de mousse d'aluminium (202) pour que le pôle positif (201) et le pôle négatif passent au travers, respectivement.
